# EUROPEAN PATENT SPECIFICATION

(11) **EP 0 902 061 B1**
(45) Date of publication and mention of the grant of the patent: **12.12.2007**
(21) Application number: 98810864.3
(22) Date of filing: 01.09.1998
(51) Int. Cl.: C09B 67/20, C08K 7/00, C08K 13/00, C09B 67/06

(54) **Stir-in pigment compositions**
Zusammensetzung von vermischbaren Pigmenten
Compositions de pigments prêts à être mélangés

(30) Priority: 08.09.1997 US 58154 P; 23.09.1997 US 59768 P
(43) Date of publication of application: 17.03.1999
(60) Divisional application: 07106147.7
(73) Proprietor: Ciba Specialty Chemicals Holding Inc., 4057 Basel (CH)
(72) Inventor: Bäbler, Fridolin, Hockessin, DE 19707 (US)

(56) References cited:
- EP-A- 0 466 646
- EP-A- 0 702 062
- EP-A- 0 702 063
- GB-A- 1 537 223
- US-A- 3 904 562
- PATENT ABSTRACTS OF JAPAN vol. 008, no. 052 (C-213), 9 March 1984 (1984-03-09) & JP 58 208351 A (SANYOU SHIKISO KK), 5 December 1983 (1983-12-05)

## Description

The present invention relates to stir-in pigment compositions in the form of microgranules, comprising 85 to 99.5 parts by weight of a pigment and 0.5 to 15 parts by weight of an additive comprising a vinylpyrrolidone copolymer.

Organic stir-in pigments are known and are described for example in U.S. Patent No. 5,554,217. These known stir-in pigments and stir-in pigment compositions show excellent stir-in properties when applied in paint and ink systems, particularly solvent-based systems. They have the great advantage that they can be incorporated into an ink or paint system by simply stirring the pigment powder into the paint system without the time and energy-consuming dispersion step in a bead mill.

It is also known to use certain pigment preparations, also called master batches, having a pigment concentration of 30 to 60 weight percent based on the preparation, as stir-in pigments. Such stir-in preparations show excellent properties in certain applications. However, they do have the disadvantage of employing an expensive preparation process, and occasionally they show incompatibility in some application media due to the high amount of carrier additives.

Many patents describe processes for pigment surface modifications to enhance certain pigment properties like color strength or rheological properties, for example by the addition of pigment derivatives such as pigment sulfonic acids, sulfonamides or other pigment derivatives. However, such treated pigments need to be dispersed for many hours in a bead mill in order to incorporate the pigment into a paint vehicle.

U.S. Patent No. 3,806,464 discloses the encapsulation of pigments with an acrylic interpolymer, and Japanese published patent application SHO 57-49664A describes a process for the preparation of pigment compositions containing thermoplastic resins which can be dissolved in water with a basic substance. Although these pigments contain polar polymers, they are different from the present inventive pigment compositions because they contain different kinds of additives. Furthermore, they show incompatibility in certain application media. Therefore, their use as pigment compositions has not been wide-spread. Other patents, such as U.S. Patents 5,274,010 and 5,401,780, describe a process for warp-free pigmenting of polyolefins by coating the pigment surface with a polyvinylalcohol or other polar polymers such as acrylic polymers, cellulose derivatives, maleic anhydride-styrene copolymers and polyvinylpyrrolidone, alone or in combination with silane and zirconium acetylacetonate films. The coating of the pigment is achieved by (A) absorption of a preformed, soluble polymer onto the pigment or (B) by polymerization of a corresponding monomer in the presence of the pigment. In either case the resulting coated pigment is recovered by filtration from an aqueous suspension. Such suspensions are difficult to filter and can show strong bleed-through of very finely divided pigment particles. Therefore filter aids are often added to improve the filtration rates. However, the presence of these filter aids in the pigment composition can lead to incompatibility of the resulting coated pigments when applied in substrates other than polyolefins. Additionally, such pigment suspensions contain a large quantity of unabsorbed polymer which is dissolved in the aqueous medium and thus remains in the filtrate after filtration. This highly colored filtrate then requires special treatment in order to recover or degrade the soluble polymer and to decrease the filtrate's color to environmentally acceptable levels.

U.S. Patent No. 5,145,524 discloses surface modification of pigments by treatment with polyvinylalkyl ethers to obtain pigments with enhanced properties for automotive finish systems. This surface treatment also improves the flow properties of the pigment in aqueous systems, leading to aqueous pigment dispersions with a higher solids content for direct application in waterborne paint systems. Such pigment dispersions can have the drawback of foaming and settling. Additionally, they require the addition of antifouling agents. Moreover, in most cases they still need to be dispersed in a bead mill for optimum dispersion.

U.S. Patent No. 3,904,562 describes a process for encapsulating finely divided organic pigment particles with a polymeric outer layer by a precipitation process. This process is costly and environmentally unfriendly due to the use of a large quantity of an inorganic salt to induce precipitation of the polymer from the aqueous medium. Additionally, the particles encapsulated according to the teachings of this patent require a higher molecular weight polyvinylpyrrolidone and a larger amount of polymer based on the pigment to ensure complete encapsulation, which can adversely affect the compatibility of the pigment when it is applied in various different substrates.
Japanese laid open patent application SHO 58-208351 describes pigment compositions comprising a pigment and a water soluble copolymer of an ethylenically unsaturated sulfonic acid compound and a N-vinylpyrrolidone compound. Said pigment compositions can be incorporated into aqueous vehicles by simple mechanical stirring without a dispersion step. However, due to the presence of the polymeric sulfonic acids, these pigment compositions may not be suitable for many applications, for example, application in automotive paint systems, since it is well known that the strongly polar polysulfonic acids have a detrimental effect on the curing of the coating system. Additionally, the presence of the polysulfonic acids can enhance water absorption, which can further damage the weatherability of the pigmented coating system.

Due to environmental concerns and new environmental regulations the paint industry is moving extensively from solvent borne to aqueous borne coatings systems. Newly developed improved aqueous polymeric binder systems are helping to speed up this transformation, but they also force pigment manufacturers to continually modify their pigments to adapt the pigment properties to the latest customer needs.

The present invention relates to new stir-in pigment compositions in the form of microgranules comprising 85 to 99.5 parts by weight of a pigment and 0.5 to 15 parts by weight of an additive which comprises a vinylpyrrolidone copolymer, which is selected from copolymers of vinylpyrrolidone with vinylether or vinylalcohol, acrylic or methacrylic acid or an ester or amide thereof. These new microgranule stir-in pigment compositions are obtainable by spray drying a high solids content aqueous pigment dispersion containing the pigment and the additive. They manifest enhanced pigment properties when applied in aqueous ink and paint systems, particularly those used in industrial coatings, trade sales and the automotive industry.

Unexpectedly, it was discovered that such stir-in pigment compositions can effortlessly be incorporated into aqueous ink and paint systems as a stir-in pigment without carrying out a dispersion step in a bead mill. Compared to conventionally dried and micropulverized pigments, the new pigment compositions are generally less dusty and can be more easily handled. They are also easily wetted and disperse rapidly to form homogeneous aqueous pigment dispersions which are practically free of larger pigment aggregates. Many small particle size pigments are known to aggregate during the drying process. However, even with pigments exhibiting this aggregation tendency, surprisingly, the inventive microgranular stir-in pigment compositions are easily dispersible in aqueous paint systems. Moreover such stir-in pigment compositions have the great advantage that they are compatible with a variety of aqueous paint and ink systems, including the most demanding automotive paint systems. Additionally, the new stir-in pigment compositions are obtainable by a very simple, economical and environmentally friendly method in conventional equipment.

This invention relates to stir-in pigment compositions which are in the form of microgranules and comprise from 85 to 99.5 parts, preferably 90 to 99 parts and most preferably 94 to 99 parts by weight of a pigment and from 0.5 to 15 parts, preferably 1 to 10 parts and most preferably 1 to 6 parts by weight of an additive comprising a vinylpyrrolidone copolymer.

These new microgranular stir-in pigment compositions are preferably obtainable by spray drying an aqueous pigment dispersion, comprising 85 to 99.5 parts by weight of a pigment and from 0.5 to 15 parts by weight of an additive comprising a vinylpyrrolidone copolymer. Particularly preferred is a spray drying of a high solid content aqueous pigment dispersion. They are useful for coloring high molecular weight materials.

A wide variety of vinylpyrrolidone copolymers are suitable as additives for preparing the inventive stir-in pigment compositions.

Suitable vinylpyrrolidone copolymers are, for example, copolymers of vinylpyrrolidone with vinylether, or vinylalcohol; acrylic or methacrylic acid or an ester or amide thereof.

Especially suitable are water-soluble copolymers.

Depending on the pigment employed in the inventive stir-in pigment composition and its application medium, it can be advantageous to use the vinylpyrrolidone copolymer additive in admixture with other preferably water-soluble polymers, copolymers and/or polymer derivatives.

Hence, another preferred embodiment of the present invention concerns the inventive pigment composition, wherein the additive comprises a mixture of the vinylpyrrolidone copolymer with one or more other neutral, anionic or cationic water soluble polymers, copolymers and/or polymer derivatives, and wherein the total amount of the mixture of additives is less than 20 parts by weight of the pigment composition.

Such polymers are for example polyacrylic acid, polymethacrylic acid, polymaleic anhydride, polyurethane, polyvinylether, polyvinylalcohol, polyalkylene glycol, polyethylene oxide, cellulose derivatives, polyimine, polyvinylpyridine, or copolymers thereof, or copolymers such as copolymers of acrylic acid with styrene, acrylonitrile, vinylacetate, vinylphosphonate, vinylpropionate, vinylchloride, itaconic acid or maleic anhydride, or a mixture thereof. Suitable polymeric derivatives are for example ethoxylated or propoxylated fatty amines such as ethoxylated cocoalkyl, oleyl or soyaalkyl amines; ethoxylated or propoxylated fatty quaternary salts such as ethoxylated cocoalkyltrimethyl ammonium chloride; ethoxylated fatty amides such as ethoxylated oleamides; alkyl-, cycloalkyl- or alkylaryloxypoly(ethylenoxy)ethanol, cycloalkyloxypoly(ethylenoxy)laurate or oleate, polyethylene glycol 400 laurate or oleate, alkyl-, cycloalkyl- or alkylaryl-poly(ethylenoxy)carboxylate or phosphonate. An especially preferred cycloalkyloxypoly(ethylenoxy) laurate or oleate is for example a poly(ethylenoxy)sorbitan laurate or oleate. These other preferably water-soluble polymers, copolymers and/or polymer derivatives are known per se and are commercially available.

The total amount of the vinylpyrrolidone copolymer additive and other preferably water-soluble polymers, copolymers and/or polymer derivatives in the inventive pigment composition is preferably no more than 20 parts by weight, most preferably from 5 to 15 parts by weight. Preferably such a mixture comprises at least 20 %, most preferably 20 to 80 % by weight of the vinylpyrrolidone polymer or vinylpyrrolidone copolymer.

If the other polymer, copolymer and/or polymer derivative is an anionic or cationic polymer, the polymer additive mixture is preferably dissolved as salts in an aqueous medium, preferably a basic or acidic aqueous medium.

Another preferred embodiment relates to the inventive pigment composition, wherein said cationic polymer is polyvinylpyridine or polyimine.

Advantageously an anionic polymer or polymer derivative or copolymer is dissolved in water as an alkylammonium, sodium, potassium or an ammonium salt.

A further preferred embodiment relates to the inventive pigment composition, wherein said pigment is an organic or inorganic pigment or a mixture thereof.

Especially suitable pigments for the present stir-in pigment compositions are organic pigments selected from the group consisting of azo, azomethine, methine, anthraquinone, phthalocyanine, perinone, perylene, diketopyrrolopyrrole, thioindigo, iminoisoindoline, dioxazine, iminoisoindolinone, quinacridone, flavanthrone, indanthrone, anthrapyrimidine and quinophthalone pigments, or a mixture or solid solution thereof; especially an azo, dioxazine, diketopyrrolopyrrole, quinacridone, phthalocyanine, indanthrone or iminoisoindolinone pigment, or a mixture or solid solution thereof.

Notable pigments useful in the present stir-in pigment compositions are those pigments described in the Color Index, including the group consisting of C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I. Pigment Red 264, C.I. Pigment Brown 23, C.I. Pigment Yellow 109, C.I. Pigment Yellow 110, C.I. Pigment Yellow 147, C.I. Pigment Yellow 191.1, C.I. Pigment Yellow 74, C.I. Pigment Yellow 83, C.I. Pigment Yellow 13, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, and C.I. Pigment Green 36, or a mixture or solid solution thereof.

Suitable inorganic pigments useful in the present stir-in pigment compositions are selected from the group consisting of carbon black, metal oxides, mixed metal oxides, antimony yellow, lead chromate, lead chromate sulfate, lead molybdate, ultramarine blue, cobalt blue, manganese blue, chrome oxide green, hydrated chrome oxide green, cobalt green, metal sulfides, cadmium sulfoselenides, zinc ferrite, and bismuth vanadate, and mixtures thereof.

Generally, the pigment according to this invention has an average particle size in the range of from 0.001 to 30 µm, preferably within the range from 0.005 to 5 µm. Based on these average particle size ranges, it is clear that the pigment preferably is used in the form of a pigment crude or a conditioned pigment. Preferably the pigment is used in its aqueous presscake form as obtained for example by the isolation of the pigment after synthesis or conditioning. Additionally, the pigment can contain customary additives, such as inorganic fillers, light stabilizers and/or antiflocculating agents.

Therefore, another preferred embodiment of the instant invention concerns the inventive pigment composition, wherein said pigment is a mixture of an organic pigment and an inorganic filler.

The expression "inorganic filler" means a substantially transparent inorganic pigment. For example, mica, kaolin, talc, wollastonite and natural or synthetic silica, e.g. glass, are well-known inorganic fillers that are suitable for use in the pigment compositions of the present invention. Talc, muscovite mica and kaolin, or mixtures thereof, are highly suitable inorganic fillers.

Transparent micas are especially suitable for use as an inorganic filler. Of the micas, muscovite, phlogopite, brolite and synthetic micas are most suitable.

The inorganic filler is preferably used in its natural form, but treated transparent or semitransparent inorganic filler pigments, for example a mica treated with a metal oxide, or talc treated with an organic aliphatic compound, such as a long chain aliphatic acid, may also be employed. In general, the inorganic filler consists of primary filler particles having any geometric shape, but a flaked shape is preferred. Preferably the inorganic filler has an average particle size in the range of 0.5 to 10 µm and a maximum particle size of below 20 µm.

Typically the inorganic filler is used in a concentration of 1 to 30 percent based on the weight of the pigment.

Hence, another preferred embodiment relates to the inventive pigment composition, wherein said pigment is a mixture of 70 to 99 parts by weight of an organic pigment and 1 to 30 parts by weight of an inorganic filler.

Light stabilizers, such as U.V. absorbers and hindered amine light stabilizers, are known in the art. They may be used in any suitable, effective amount in the present pigment compositions as long as they do not impair the stir-in pigment properties of the composition.

Antiflocculating agents, also described as rheology improving agents or particle growth inhibitors, are well known in the pigment industry and are suitable as additives for the present pigment compositions. Generally antiflocculating agents are for example, pigment derivatives such as the sulfonic acid, sulfonic acid salts or sulfonamide derivatives of organic pigments. Typically rheology improving agents are used in a concentration of 0.5 to 8 percent based on the weight of the organic pigment.

The inorganic filler, light stabilizer and/or antiflocculating agent is incorporated into the composition before, during or after the spray drying step. Preferably, these customary additives are added prior to the spray drying step. Depending on the customary additive, it is preferably added at the end of the synthesis or conditioning step, before the isolation of the pigment, or it is added into a reslurried high solids content aqueous pigment presscake dispersion.

The inventive pigment compositions can be prepared preferably by a process, which comprises
(A) preparing an aqueous solution of the additive;
(B) slurrying a pigment in the solution to obtain a homogeneous liquid dispersion comprising 85 to 99.5 parts by weight of the pigment and 0.5 to 15 parts by weight of the additive,
(C) spray drying the resulting liquid dispersion and
(D) collecting the dried microgranules of the pigment composition.

A preferred embodiment thereof concerns the inventive process, wherein an aqueous presscake of the pigment is slurried in the solution.

In a preferred method, a highly concentrated pigment presscake is slurried in any suitable device at temperatures between 5 to 90° C, preferably 20 to 60° C, such as, for example, a Cowles® disperser, in the presence of the aqueous additive solution as illustrated in the examples below to obtain a homogeneous aqueous dispersion. Suitable conditions for spray drying the homogeneous aqueous dispersions can then easily be determined by a person skilled in the art.

Due to the known pronounced fluidizing effect of the additives employed according to this invention, low viscosity aqueous pigment dispersions with a solids content of above 20% or, depending on the pigment and polymeric additive or additive mixture, solids contents of 25% and above can be easily generated. Despite the high pigment concentration, these pigment dispersions have the advantage that they are liquid, easily flowable and ideally suited for spray drying.

Spray drying is a well known drying technology in the chemical industry. Any equipment which is conventional for spray drying can be used to spray dry the inventive pigment compositions. Suitable commercially available equipment includes the BOWEN BLS spray dryer from Bowen or the NIRO ATOMIZER from NIRO Company.

Due to their high solids content, the inventive pigment dispersions are dried rapidly and economically by spray drying, yielding unique pigment composition powders composed of microgranules. The additives according to this invention are homogeneously distributed in the stir-in pigment compositions and also serve as the binder for the microgranules.

Typically, the microgranules have a size in the range of from 1 to 1000 µm, preferably from 3 to 300 µm when suspended in a water-immiscible solvent such as xylene and observed under the light microscope. They can have any shape. The shape and size of the microgranules are influenced by several parameters such as the kind and particle size of the pigment, the kind and concentration of the additive or additive mixture respectively, as well as the spray drying conditions and the spray dryer equipment. Because of the larger particle size of the microgranules, they are generally less dusty and and can be more easily handled than conventionally dried and micropulverized pigments.

The inventive pigment compositions are easily wetted in aqueous ink or paint systems. Surprisingly they are dispersed quickly by simply stirring the pigment into an aqueous ink or paint system without a dispersion step in a bead mill or other high shear-inducing equipment. Thus the inventive pigment compositions are ideal for use as stir-in pigments in aqueous systems, where they eliminate the time and energy-consuming step of bead milling as well as the expense of cleaning the bead mills.

In general, an effective pigmenting amount of the stir-in pigment composition is incorporated into the high molecular weight organic material to be pigmented. An effective pigmenting amount is any amount suitable to provide the desired color in the high molecular weight organic material. In particular, the stir-in pigments are used in an amount of 0.01 to 30% by weight, preferably 0.1 to 10% by weight, based on the weight of the high molecular weight organic material to be pigmented.

The pigmented, high molecular weight organic materials which are colored according to the present process are useful in a variety of applications. For example, the high molecular weight organic material can be used for the pigmentation of lacquers, inks and enamel coating compositions. The pigmented high molecular weight organic materials prepared according to the present invention are particularly useful for preparing automotive coating paints.

The high molecular weight organic materials which are colored according to the present process are, preferably if the high molecular weight organic material is a coating or an ink system, for example cellulose ethers, cellulose esters, polyurethanes, polyesters, polycarbonates, polyolefins, polystyrene, polysulfones, polyamides, polycycloamides, polyimides, polyethers, polyether ketones, polyvinyl halides, polytetrafluoroethylene, acrylic and methacrylic polymers, rubber, silicone polymers, phenol/formaldehyde resins, melamine, formaldehyde resins, urea/formaldehyde resins, epoxy resins and diene rubbers or copolymers thereof.

High molecular weight organic materials which are useful for heat-curable or cross-linked coatings, for example chemically-reactive coatings, are also colored according to the present process. The pigmented, high molecular weight organic materials prepared according to the present process are especially useful in stoving finishes which contain customary binders and which are reactive at high temperature. Examples of the high molecular weight organic materials which are used in such coatings include acrylic, alkyd, epoxy, phenolic, melamine, urea, polyester, polyurethane, blocked isocyanate, benzoguanamine or cellulose ester resins, or combinations thereof. The pigmented, high molecular weight organic materials prepared according to the present process are also useful in air-drying or physically-drying coatings.

The present stir-in pigment compositions are particularly suitable for preparing pigmented coatings of the types conventionally employed in industrial paints, particularly in the automobile industry, especially aqueous acrylic/melamine resin, alkyd/melamine resin, thermoplastic acrylic resin or polyurethane resin systems.

Due to the excellent dispersibility of the stir-in pigment compositions of this invention, uniform distribution of pigment particles throughout the entire application media is readily achieved. Compositions containing the present stir-in pigments show excellent rheological behavior.

The present stir-in pigment compositions are used alone or in the presence of other pigments or dyes. It is especially useful to color a high molecular weight organic material with the present stir-in pigment compositions in conjunction with an effect pigment.

The color effect and shade are varied by varying the kind of the effect pigment and the concentrations of the effect pigment and the stir-in pigment composition of the present invention. Particularly striking effect shades are generated by using the stir-in pigments with known transparent titanium dioxide-coated mica or aluminum pigments.

Due to their unique pigment properties, the new stir-in pigment compositions are also suitable for coloring high-molecular-weight organic materials which are plastics that are calendered, cast, molded or processed to fibers and the like. The pigment compositions impart excellent physical properties to colored plastic articles such as polypropylene or polyamide fibers, plastic films, bottle crates and so on. Thus, the present invention further embraces processes wherein the high molecular weight organic compound is a plastic that is calendered, cast, molded or processed to fibers and to plastic articles that are calendered, cast, molded or processed to fibers.

The new stir-in pigment compositions are easily dispersible when incorporated into high performance plastics such as for example polyethylene, polypropylene, ABS or polamide. Surprisingly, the resulting colored molded products show practically no flow lines, proving the pigment compositions are very homogenously distributed in the polymer. As one skilled in the art appreciates, the presence of flow lines is undesirable.

The inventive pigment compositions are also suitable for the preparation of liquid colors, since they can provide liquid colors with a high pigment solids content. Liquid colors are well known in the pigment industry and are mainly used to color plastic materials.

Additionally, the inventive pigment compositions are suitable for use in ink jet formulations.

The following examples illustrate various embodiments of the invention, but the scope of the invention is not limited thereto. In the examples, all parts are by weight unless otherwise indicated.

## Claims

1. A stir-in pigment composition in the form of microgranules, which comprises 85 to 99.5 parts by weight of a pigment and 0.5 to 15 parts by weight of an additive comprising a vinylpyrrolidone copolymer which is selected from copolymers of vinylpyrrolidone with vinylether or vinylalcohol; acrylic or methacrylic acid or an ester or amide thereof.

2. A pigment composition of claim 1, wherein the additive comprises a mixture of the vinylpyrrolidone copolymer with one or more other neutral, anionic or cationic water soluble polymers, copolymers and/or polymer derivatives, and wherein the total amount of the mixture of additives is less than 20 parts by weight of the pigment composition.

3. A pigment composition of claim 1 or 2, wherein said pigment is a mixture of an organic pigment and an inorganic filler.

4. A process for the preparation of the pigment composition of claims 1 to 3 which comprises
(A) preparing an aqueous solution of the additive;
(B) slurrying a pigment in the solution to obtain a homogeneous liquid dispersion comprising 85 to 99.5 parts by weight of the pigment and 0.5 to 15 parts by weight of the additive,
(C) spray drying the resulting liquid dispersion and
(D) collecting the dried microgranules of the pigment composition.

5. A pigmented high molecular weight organic material, which comprises an effective pigmenting amount of a pigment composition according to claims 1 to 3 and a high molecular weight organic material.

6. A process for the preparation of a pigmented high molecular weight organic material, which comprises incorporating a pigment composition according to claims 1 to 3 into the high molecular weight organic material as a stir-in pigment.

7. A pigmented high molecular weight organic material of claim 5, wherein the high molecular weight organic material is a heat-curable or cross-linkable reactive coating system.

8. A pigmented high molecular weight organic material of claim 7, wherein the high molecular weight organic material is a plastic that is calendered, cast, molded or processed to fibers and to plastic articles that are calendered, cast, molded or processed to fibers.

9. Use of the pigment composition according to claims 1 to 3 for the preparation of a pigmented high molecular weight organic material.

## Patentansprüche

1. Stir-In-Pigmentzusammensetzung in Form von Mikrogranulen, die 85 bis 99,5 Gewichtsteile eines Pigments und 0,5 bis 15 Gewichtsteile eines Additivs, umfassend ein Vinylpyrrolidon-Copolymer, das ausgewählt ist aus Copolymeren von Vinylpyrrolidon mit Vinylether oder Vinylalkohol; Acryl- oder Methacrylsäure oder einem Ester oder Amid davon.

2. Pigmentzusammensetzung nach Anspruch 1, worin das Additiv ein Gemisch von dem Vinylpyrrolidon-Copolymer mit einem oder mehreren anderen neutralen, anionischen oder kationischen, in Wasser löslichen Polymeren, Copolymeren und/oder Polymerderivaten umfasst, und worin die Gesamtmenge des Gemisches an Additiven weniger als 20 Gewichtsteile der Pigmentzusammensetzung ist.

3. Pigmentzusammensetzung nach Anspruch 1 oder 2, worin das Pigment ein Gemisch von einem organischen Pigment und einem anorganischen Füllstoff ist.

4. Verfahren zur Herstellung der Pigmentzusammensetzung nach Ansprüchen 1 bis 3, das umfasst
(A) Herstellen einer wässrigen Lösung des Additivs;
(B) Aufschlämmen eines Pigments in der Lösung, um eine homogene flüssige Dispersion, umfassend 85 bis 99,5 Gewichtsteile des Pigments und 0,5 bis 15 Gewichtsteile des Additivs, zu erhalten;
(C) Sprühtrocknen der erhaltenen flüssigen Dispersion und
(D) Sammeln der getrockneten Mikrogranulen der Pigmentzusammensetzung.

5. Pigmentiertes organisches Material mit hohem Molekulargewicht, das eine wirksam pigmentierende Menge einer Pigmentzusammensetzung nach Ansprüchen 1 bis 3 und ein organisches Material mit hohem Molekulargewicht umfasst.

6. Verfahren zur Herstellung eines pigmentierten organischen Materials mit hohem Molekulargewicht, das Einarbeiten einer Pigmentzusammensetzung nach Ansprüchen 1 bis 3 in das organische Material mit hohem Molekulargewicht als ein Stir-In-Pigment umfasst.

7. Pigmentiertes organisches Material mit hohem Molekulargewicht nach Anspruch 5, worin das organische Material mit hohem Molekulargewicht ein wärmehärtbares oder vernetzbares reaktives Beschichtungssystem darstellt.

8. Pigmentiertes organisches Material mit hohem Molekulargewicht nach Anspruch 7, worin das organische Material mit hohem Molekulargewicht ein Kunststoff ist, der kalandriert, gegossen, geformt oder verarbeitet wird zu Fasern und zu Kunststoffgegenständen, die kalandriert, gegossen, geformt oder zu Fasern verarbeitet werden.

9. Verwendung einer Pigmentzusammensetzung nach Ansprüchen 1 bis 3 zur Herstellung eines pigmentierten organischen Materials mit hohem Molekulargewicht.

## Revendications

1. Composition de pigments incorporés par simple agitation sous la forme de microgranulés qui comprennent de 85 à 99, 5 parties en poids d'un pigment et de 0,5 à 15 parties en poids d'un additif comprenant un copolymère de vinylpyrrolidone qui est choisi parmi les copolymères de vinylpyrrolidone avec de l'éther vinylique ou de l'alcool vinylique ; de l'acide acrylique ou méthacrylique ou un ester ou un amide de ceux-ci.

2. Composition de pigments selon la revendication 1, dans laquelle l'additif comprend un mélange du copolymère de vinylpyrrolidone avec un ou plusieurs autres polymères, copolymères et/ou dérivés de polymères hydrosolubles cationiques, neutres ou anioniques, et dans laquelle la quantité totale du mélange d'additifs est inférieure à 20 parties en poids de la composition de pigments.

3. Composition de pigments selon la revendication 1 ou 2, dans laquelle ledit pigment est un mélange d'un pigment organique et d'une charge inorganique.

4. Procédé de préparation de la composition de pigments selon les revendications 1 à 3 qui comprend
(A) la préparation d'une solution aqueuse de l'additif;
(B) le mélange d'un pigment dans la solution pour obtenir une dispersion liquide homogène comprenant de 85 à 99,5 parties en poids du pigment et de 0,5 à 15 parties en poids de l'additif,
(C) le séchage par pulvérisation de la dispersion liquide ainsi obtenue et
(D) la collecte des microgranulés séchés à partir de la composition de pigments.

5. Matière organique à masse moléculaire élevée pigmentée, qui comprend une quantité de pigmentation efficace de la composition de pigments selon les revendications 1 à 3 et une matière organique à masse moléculaire élevée.

6. Procédé de préparation d'une matière organique à masse moléculaire élevée pigmentée, qui comprend l'incorporation d'une composition de pigments selon les revendications 1 à 3 dans la matière organique à masse moléculaire élevée en tant que pigment incorporé par simple agitation.

7. Matière organique à masse moléculaire élevée pigmentée selon la revendication 5, dans laquelle la matière organique à masse moléculaire élevée est un système de revêtement réactif thermodurcissable ou réticulable.

8. Matière organique à masse moléculaire élevée pigmentée selon la revendication 7, dans laquelle la matière organique à masse moléculaire élevée est une matière plastique qui est calandrée, coulée, moulée ou transformée en fibres et en articles de matière plastique qui sont calandrés, coulés, moulés ou transformés en fibres.

9. Utilisation de la composition de pigments selon les revendications 1 à 3 pour la préparation d'une matière organique à masse moléculaire élevée pigmentée.
